# EUROPEAN PATENT SPECIFICATION

(11) **EP 3 460 021 B1**
(45) Date of publication and mention of the grant of the patent: **28.06.2023**
(21) Application number: 17799156.9
(22) Date of filing: 27.04.2017
(51) Int. Cl.: C09K 3/18, C08G 18/80, D06M 13/02, D06M 13/395, D06M 15/564, D06M 15/643, D06M 15/65, D06M 15/263, D06M 15/568

(54) **WATER REPELLENT AND PRODUCTION PROCESS THEREFOR**
WASSERABWEISENDES MITTEL UND HERSTELLUNGSVERFAHREN DAFÜR
AGENT D'HYDROFUGATION, ET PROCÉDÉ DE FABRICATION DE CELUI-CI

(30) Priority: 17.05.2016 JP 2016098727
(43) Date of publication of application: 27.03.2019
(73) Proprietor: MEISEI CHEMICAL WORKS, LTD., Kyoto-shi, Kyoto 615-8666 (JP)
(72) Inventor: MATSUMURA, Tatsuya, Kyoto-shi Kyoto 615-8666 (JP); HASHIMOTO, Takafumi, Kyoto-shi Kyoto 615-8666 (JP)
(74) Representative: Isarpatent
(86) International application number: PCT/JP2017/016813
(87) International publication number: WO 2017/199726

(56) References cited:
- WO-A1-97/37076
- JP-A- 2001 234 071
- JP-A- 2015 199 887
- JP-A- 2015 505 876
- US-A1- 2010 190 397
- US-A1- 2012 114 928
- US-B1- 6 379 751
- DATABASE WPI Week 200444 Thomson Scientific, London, GB; AN 2004-462558 XP002795650, -& JP 2004 059609 A (MIKI RIKEN KOGYO KK) 26 February 2004 (2004-02-26)

## Description

### TECHNICAL FIELD

The present invention relates to a water repellent treatment agent for imparting water repellency to fibers, and a method for producing the same.

### BACKGROUND ART

It is well known to orient a hydrocarbon compound, a silicone compound, a fluorine compound, a chlorine compound or the like on the surface of fibers to lower the surface tension of the surface of fibers as compared with the surface tension of water in order to impart water repellency to the fibers. Among these, fluorine compounds have been often used as a water repellent component capable of imparting high water repellency to fibers. However, since fluorine compounds often contain PFOA (perfluoro octanoic acid) that influences on the environment or human bodies, development for a water repellent free of PFOA, and further for a water repellent free of a fluorine compound (fluorine-free water repellent) is advancing.

The water repellent requires laundry durability of the water repellency, and in this aspect, it is well known to use a cross-linker in combination so as to improve the laundry durability of the water repellency. Examples of known cross-linkers include isocyanate compounds, blocked isocyanate compounds, epoxy compounds, carbodiimide compounds, oxazoline compounds, glyoxal compounds, and melamine compounds.

Patent Document 1 discloses imparting the water repellency with excellent durability to various materials by a treatment using a combination of an emulsion of an amino-modified silicone and an emulsion of a multifunctional blocked isocyanate or the like. The invention of Patent Document 1 discloses a method of using an emulsion of an amino-modified silicone and an emulsion of a blocked isocyanate that are separately prepared, after they are mixed, or while they are mixed in a process bath. However, it is also disclosed that adequate water repellency cannot be imparted in the initial stage depending on the kind of fibers.

Meanwhile, Patent Document 2 discloses as a treatment agent that is excellent in water and oil repellency and laundry durability, a water and oil repellent composition comprising a (meth)acrylate containing a polyfluoroalkyl group substituted at α-position, and a blocked isocyanate. In Example of Patent Document 2, the composition is obtained by emulsifying and polymerizing a polymerizable monomer containing fluorine and a modified silicone in the presence of a blocked isocyanate. The composition in Patent Document 2 premises containing fluorine, so that it is not an invention concerning a fluorine-free water repellent.

Patent Document 3 discloses, as a fiber treatment agent having low temperature hardenability and achieving both the flexibility and the laundry durability, a silicone emulsion composition that is prepared by emulsification in the presence of 70 to 98 parts by mass of an organo polysiloxane having an amino group, and 2 to 30 parts by mass of a specific blocked isocyanate. Example of Patent Document 3 discloses that the silicone composition prepared by mixing and stirring 90 to 97 parts of an amino-modified silicone, and 3 to 10 parts of a blocked isocyanate has excellent low temperature hardenability and shows excellent appearance after being left at 25°C for a day, and shows a silicone remaining amount of 50% or more after a single washing. However, Patent Document 3 lacks description about the use or function as a water repellent, and does not confirm the laundry durability for plural times of washing.

Patent Document 4 discloses as a composition for improving the water repellency and the durability of the surface treatment agent and reducing the use amount of the fluorine polymer, a urethane compound that can be obtained by reacting (a) a compound having an isocyanate group, with (b) a compound capable of reaction with isocyanate, such as a sorbitan fatty acid ester, an alkyl citrate, or a pentaerythritol fatty acid ester. For treatment on fibers, there is shown a method of preparing an emulsion of the obtained urethane compound, and processing fibers using an emulsion of a blocked isocyanate that is separately prepared together so as to give the laundry durability. Example and Comparative Example of Patent Document 4 disclose that the cloth free of a fluorine polymer and treated only with the composition can be low in oil repellency and poor in laundry durability.

Patent Document 5 discloses a fluorine-free composition for imparting the water repellency to a base material, obtained by the step of reacting (a) a compound containing an isocyanate group, with (b) a specific compound capable of reacting with an isocyanate group. As the (b) compound capable of reacting with an isocyanate group, sorbitan fatty acid ester (fatty acid ester of sorbitan etc.), alkyl citrate, and pentaerythritol fatty acid ester are disclosed. Example of Patent Document 5 discloses that water repellency can be obtained by treating a cloth with an aqueous emulsion prepared by emulsifying a reactant of an isocyanate component and a sorbitan fatty acid ester with a surfactant. There is no disclosure about the laundry durability.

### PRIOR ART DOCUMENTS

### PATENT DOCUMENTS

Patent Document 1: JP-A-2004-59609
Patent Document 2: JP-T-2013-511574
Patent Document 3: JP-A-2015-199887
Patent Document 4: WO2014/160906
Patent Document 5: WO2014/160905

### SUMMARY OF THE INVENTION

### PROBLEMS TO BE SOLVED BY THE INVENTION

As described above, a fluorine-free water repellent is well known. It is also known that a blocked isocyanate is used together as a crosslinking component for improving the laundry durability of the water repellent. However, even when a combination of an emulsion of a water repellent and an emulsion of a cross-linker is used, there is sometimes the case that adequate water repellency or laundry durability is not obtained, or laundry durability is not obtained depending on the kind of the cloth. In light of the present circumstances, it is an object of the present invention to provide a fluorine-free water repellent capable of imparting excellent initial water repellency and laundry durability of water repellency to a wide variety of fibers.

### MEANS FOR SOLVING THE PROBLEMS

The present inventors repeated diligent studies for solving the problems as described above, and conceived that using the water repellent and the cross-linker that have been separately emulsified by simply mixing the water repellent and the cross-linker leads deterioration in water repellency because the water repellent component and the crosslinking component do not necessarily have affinity, and the part where only the water repellent component or the crosslinking component is present is easy to occur when the components are processed on the cloth, and cross-linking of the water repellent component is limited to part of it. Then the present inventors got an idea of ameliorating the deterioration in water repellency or the deterioration in laundry durability occurring due to the combination of the water repellent and the cross-linker, and constantly exerting excellent water repellency and laundry durability by using a hybrid emulsion in which the water repellent component and the crosslinking component are compulsorily caused to coexist in one particle in the stage of emulsification. A method for preparing a hybrid emulsion is disclosed, in JP-T-2007-512411, JP-A-2000-239521 and so on. In the present invention, the term hybrid emulsion means an emulsion in which two or more components coexist in one emulsion particle, and there is no bond between these components.

Then, the present inventor found that by mixing a fluorine-free water repellent component and a crosslinking component having a self-emulsifiability as a crosslinking component, in particular, a blocked isocyanate having a self-emulsifiability, and adding water to the mixture, it is possible to obtain a hybrid emulsion in which the crosslinking component and the water repellent component coexist in one particle, and it is possible to obtain excellent water repellency and laundry durability by this hybrid emulsion. The present inventor found that also by mixing a fluorine-free water repellent component and a crosslinking component using a blocked isocyanate, and emulsifying the mixture in water using a surfactant, it is possible to obtain a hybrid emulsion in which the crosslinking component and the water repellent component coexist in one particle, and it is possible to obtain excellent water repellency and laundry durability by this emulsion, and accomplished the present invention.

That is, the present invention relates to a water repellent treatment agent according to claim 1, including a water repellent component and a crosslinking component capable of reacting with the water repellent component, the water repellent treatment agent being an aqueous emulsion composed of a hybrid emulsion in which the water repellent component and the crosslinking component are contained in one particle, the aqueous emulsion being free of a component containing fluorine, wherein the water repellent component is a silicone component having at least one or more of an amino group, a hydroxyl group, a carboxyl group, a mercapto group, an epoxy group, and the crosslinking component is a blocked isocyanate having self-emulsifiability in which a polyoxyalkylene monoalkyl ethers is introduced into part of an isocyanate compound, or wherein the water repellent component is a hydrocarbon compound having a long chain alkyl group and a functional group capable of reacting with the crosslinking component, and the crosslinking component is a blocked isocyanate, or wherein the water repellent components are a silicone component having at least one or more of an amino group, a hydroxyl group, a carboxyl group, a mercapto group, an epoxy group and a hydrocarbon compound having a long chain alkyl group and a functional group capable of reacting with the crosslinking component, and the crosslinking component is a blocked isocyanate.

Also, the present invention relates to the water repellent treatment agent, wherein the crosslinking component is a blocked isocyanate, and further relates to the water repellent treatment agent, wherein the blocked isocyanate is a blocked isocyanate having a self-emulsifiability.

Also, the present invention relates to any one of the water repellent treatment agents, wherein in solids of the water repellent treatment agent, the water repellent component is 20 to 90% by mass, and the crosslinking component is 10 to 80% by mass.

Also, the present invention relates to any one of the water repellent treatment agents, wherein the water repellent component is either or both of a silicone compound or a hydrocarbon compound having a functional group capable of reacting with the crosslinking component.

Also, the present invention relates to any one of the water repellent treatment agents further including a surfactant.

Also, the present invention relates to any one of the water repellent treatment agents further including an acrylate polymer or an acryl-silicone polymer.

Further, the present invention relates to a method for producing a water repellent treatment agent, including the steps of:
(I) reacting an isocyanate compound,
   a hydrophilic compound capable of reacting with an isocyanate group of the isocyanate compound, which is a polyoxyalkylene monoalkyl ether, and
   a blocking agent capable of reacting with an isocyanate group of the isocyanate compound in an optional organic solvent, until an NCO content becomes 0% to obtain a blocked isocyanate;
(II) adding and mixing a water repellent component free of fluorine which is a silicone component having at least one or more of an amino group, a hydroxyl group, a carboxyl group, a mercapto group, an epoxy group, and the optional organic solvent, to a liquid containing the blocked isocyanate obtained in the step (I) and then further adding water, to obtain an emulsion; and (III) removing the optional organic solvent from the emulsion obtained in the step (II) to obtain an aqueous emulsion free of fluorine, containing the blocked isocyanate and the water repellent component.

Also, the present invention relates to a method for producing a water repellent treatment agent, including the steps of:
(a) reacting an isocyanate compound, and a blocking agent capable of reacting with an isocyanate group of the isocyanate compound in an optional organic solvent until an NCO content becomes 0% to obtain a blocked isocyanate; (b) adding and mixing a water repellent component free of fluorine which is a hydrocarbon compound having a long chain alkyl group and a functional group capable of reacting with the crosslinking component, a surfactant, an optional organic solvent to a liquid containing the blocked isocyanate obtained in the step (a), and then further adding water to obtain an emulsion; and (c) removing the optional organic solvent from the emulsion obtained in the step (b) to obtain an aqueous emulsion free of fluorine, containing the blocked isocyanate and the water repellent component.

Also, the present invention relates to a fiber product to which water repellency is imparted by any one of the water repellent treatment agents. Further, the present invention relates to a method for producing a water repellent fiber product using any one of the water repellent treatment agents, the method including the step of preparing a processing liquid containing the water repellent treatment agent, and bringing a fiber product into contact with the processing liquid. Eventuallly, the present invention relates to method for producing a water repellent treatment agent free of fluorine, comprising the steps of: (a) reacting an isocyanate compound, and a blocking agent capable of reacting with an isocyanate group of the isocyanate compound in an optional organic solvent until an NCO content becomes 0% to obtain a blocked isocyanate; (b) adding and mixing a first water repellent component free of fluorine which is a silicone component having at least one or more of an amino group, a hydroxyl group, a carboxyl group, a mercapto group, an epoxy group, a second water repellent component free of fluorine which is a hydrocarbon compound having a long chain alkyl group and a functional group capable of reacting with the crosslinking component, a surfactant, and an optional organic solvent to a liquid containing the blocked isocyanate obtained in the step (a), and then further adding water to obtain an emulsion; and (c) removing the optional organic solvent from the emulsion obtained in the step (b) to obtain an aqueous emulsion free of fluorine, containing the blocked isocyanate, the first water repellent component, and the second water repellent component.

### EFFECT OF THE INVENTION

The water repellent treatment agent of the present invention is an aqueous hybrid emulsion in which a water repellent component and a crosslinking component coexist in one particle, and enables easy water repellent treatment on fibers. Also, the water repellent treatment agent of the present invention is capable of imparting high water repellency for a wide variety of fibers, and is excellent in laundry durability of the water repellency.

### MODE FOR CARRYING OUT THE INVENTION

### (Water repellent component)

The water repellent treatment agent of the present invention is a hybrid emulsion containing both a water repellent component and a crosslinking component in one emulsion particle. The water repellent component refers to a component that functions as an active ingredient that exerts water repellency when treated on fibers, and examples of the water repellent component include silicone compounds and hydrocarbon compounds. In the present invention, as the water repellent component, a compound free of fluorine is used.

As the silicone compound used in the present invention as the water repellent component, those having a functional group capable of reacting with the crosslinking component are preferred, and when the crosslinking component is a blocked isocyanate, those having an amino group, a hydroxyl group, a carboxyl group, a mercapto group, an epoxy group and the like capable of reacting with an isocyanate group are preferred, for example, amino-modified silicone can be used. As the amino-modified silicone, any of those in which an amino group is introduced into a side chain of the siloxane structure, those in which an amino group is introduced into a terminal of the siloxane structure, and mixtures thereof may be used, and as the amino group, monoamine, diamine or those partly blocked may be used. In the amino-modified silicone, from the viewpoint of the water repellency, it is preferred to use those having an amine equivalent of about 300 to 20000 g/mol, and when the water repellency, the laundry durability, the handling, the cost and the like are taken into account, those having an amine equivalent of 1000 to 7000 g/mol are more preferred. As such amino-modified silicone, commercially available products can be selected and used. For example, WACKER FINISH WR301, WR1100, WR1200, WR1300, WR1600, available from Wacker Asahikasei Silicone Co., Ltd., KF-867, KF-869 and KF-8004 available from Shin-Etsu Chemical Co., Ltd. and the like can be used.

Also, carbinol-modified silicone can be used. As the carbinol-modified silicone, any of those in which a hydroxyl group is introduced into a side chain of the siloxane structure, those in which a hydroxyl group is introduced into a terminal of the siloxane structure, and mixtures thereof may be used. As such carbinol-modified silicone, commercially available products can be selected and used. For example, X-22-4039, X-22-4015, X-22-170BX, X-22-170DX, KF-6000, KF-6001, KF-6002, KF-6003 and the like available from Shin-Etsu Chemical Co., Ltd. can be used.

Also, diol-modified silicone can be used. As the diol-modified silicone, any of those in which a diol group is introduced into a side chain of the siloxane structure, those in which a diol group is introduced into a terminal of the siloxane structure, and mixtures thereof may be used. As such diol-modified silicone, commercially available products can be selected and used. For example, X-22-176DX, X-22-176F, X-22-176GX-A and the like available from Shin-Etsu Chemical Co., Ltd. can be used.

Also, phenol-modified silicone can be used. As the phenol-modified silicone, any of those in which a phenolic hydroxyl group is introduced into a side chain of the siloxane structure, those in which a phenolic hydroxyl group is introduced into a terminal of the siloxane structure, and mixtures thereof may be used. As such phenol-modified silicone, commercially available products can be selected and used. For example, KF-2201 and the like available from Shin-Etsu Chemical Co., Ltd. can be used.

Also, carboxyl-modified silicone can be used. As the carboxyl-modified silicone, any of those in which a carboxyl group is introduced into a side chain of the siloxane structure, those in which a carboxyl group is introduced into a terminal of the siloxane structure, and mixtures thereof may be used. As such carboxyl-modified silicone, commercially available products can be selected and used. For example, X-22-3701E, X-22-162C and the like available from Shin-Etsu Chemical Co., Ltd. can be used.

Also, mercapto-modified silicone can be used. As the mercapto-modified silicone, any of those in which a mercapto group is introduced into a side chain of the siloxane structure, those in which a mercapto group is introduced into a terminal of the siloxane structure, and mixtures thereof may be used. As such mercapto-modified silicone, commercially available products can be selected and used. For example, KF-2001, KF-2004, X-22-167B, X-22-167C and the like available from Shin-Etsu Chemical Co., Ltd. can be used.

Also, epoxy-modified silicone can be used. As the epoxy-modified silicone, any of those in which an epoxy group is introduced into a side chain of the siloxane structure, those in which an epoxy group is introduced into a terminal of the siloxane structure, and mixtures thereof may be used. As such epoxy-modified silicone, commercially available products can be selected and used. For example, X-22-343, KF-101, KF-1001, X-22-163, X-22-163A, X-22-163B, X-22-163C, KF-105, X-22-169AS, X-22-169B, X-22-173BX, X-22-173DX and the like available from Shin-Etsu Chemical Co., Ltd. can be used. From the aspect of the cost, amino-modified silicone is more preferred.

As the hydrocarbon compounds used as the water repellent component, those having a long chain alkyl group and having a functional group capable of reacting with the crosslinking component are used. For example, fatty acid esters and sorbitan fatty acid esters, specifically, sorbitan monolaurate, sorbitan monopalmitate, sorbitan monostearate, sorbitan distearate, sorbitan tristearate, sorbitan monooleate, sorbitan trioleate and the like, and fatty acid esters of various sorbitan derivatives disclosed in WO2014/190905, alkyl citrate, pentaerythritol derivatives and the like can be used. Among these, sorbitan tristearate, or tristearyl citrate is preferably used from the point of the water repellency.

In the water repellent treatment agent of the present invention, only one kind of the water repellent components may be used, or a combination of two or more kinds of the water repellent components can be used. For example, a combination of a hydrocarbon water repellent component and a silicone water repellent component may be used. Specifically, for example, a combination of sorbitan tristearate and amino-modified silicone can be used.

Further, in addition to the water repellent component, a silicone compound or a wax compound not having a functional group capable of reacting with the crosslinking component may be used together. In particular, a silicone compound is preferred, and for example, long-chain alkyl-modified silicone, long-chain alkyl aralkyl modified silicone, or higher fatty acid amide-modified silicone is preferred. As such modified silicone, commercially available products can be selected and used. Examples of the long chain alkyl-modified silicone include KF-412, KF-413, KF414, KF-415, KF-4003, KF-4701, KF-4917, KF-7235B, and X-22-7322 available from Shin-Etsu Chemical Co., Ltd., and BELSIL CDM 3526 VP, BELSIL CM 7026 VP, and BELSIL SDM 5055 VP available from Wacker Asahikasei Silicone Co., Ltd., and examples of the long-chain alkyl aralkyl modified silicone include X-22-1877 available from Shin-Etsu Chemical Co., Ltd., and examples of the higher fatty acid amide-modified silicone include KF-3935 available from Shin-Etsu Chemical Co., Ltd..

When a compound not having a functional group capable of reacting with the crosslinking component is used together, the amount used together in the water repellent component is 0.01 to 50% by mass, preferably 0.01 to 40% by mass, and further preferably 0.01 to 30% by mass.

### (Crosslinking component)

The water repellent treatment agent of the present invention includes a crosslinking component that reacts with a water repellent component, and has a function of heightening the water repellency or the laundry durability by binding the water repellent component and fibers. In the water repellent treatment agent of the present invention, a crosslinking component free of fluorine is used, which is a blocked isocyanate. As the blocked isocyanate, blocked isocyanates having two or more isocyanate groups in one molecule, in which 50 mol% or more of these isocyanate groups are blocked with a blocking agent can be used singly or in combination of two or more of these blocked isocyanates as appropriate. As the blocked isocyanate, known various blocked isocyanates can be used. A blocked isocyanate can be prepared by reacting a known isocyanate compound with a known blocking agent.

In the present invention, it is more preferred that the blocked isocyanate has self-emulsifiability, and as the blocked isocyanate having self-emulsifiability, for example, blocked isocyanates in which a nonionic hydrophilic group, a cationic hydrophilic group, or an anionic hydrophilic group is introduced into part of an isocyanate compound can be used, and from the viewpoint of the water repellency, a blocked isocyanate in which a nonionic hydrophilic group having an oxyethylene group is introduced can be preferably used. A blocked isocyanate can be obtained by a known method using an isocyanate compound as a material. Examples of the hydrophilic compound to be reacted with the isocyanate compound for imparting self-emulsifiability include polyoxyalkylene monoalkyl ethers such as polyethylene glycol monomethyl ether, polyethylene glycol monoethyl ether, polyethylene glycol polypropylene glycol monomethyl ether, and polypropylene glycol polyethylene glycol monobutyl ether; (poly)ethylene glycols such as ethylene glycol, or diethylene glycol, triethylene glycol, and polyethylene glycol; block copolymers, or random copolymers of polyethylene glycol, polypropylene glycol, or polytetramethylene glycol, random copolymers or block copolymers of ethylene oxide and propylene oxide, or ethylene oxide and butylene oxide; polyoxyalkylene monoamines, and polyoxyalkylene diamines, and polyethylene glycol monomethyl ether, polyethylene glycol monoethyl ether and the like are preferably used. The nonionic hydrophilic compound may be used singly or in combination of two or more kinds. By introducing these compound in an amount of about 1 to 50 mol% relative to the isocyanate group, it is possible to impart the self-emulsifiability to the blocked isocyanate.

Examples of the isocyanate compound for obtaining the blocked isocyanate include aliphatic polyisocyanates, alicyclic polyisocyanates, aromatic polyisocyanates, and aroaliphatic polyisocyanates. Examples of the aliphatic polyisocyanates include 1,4-tetramethylene diisocyanate, 1,5-pentamethylene diisocyanate, 1,6-hexamethylene diisocyanate, 2,2,4-trimethylhexamethylene diisocyanate, 2,4,4-trimethylhexamethylene diisocyanate, lysine diisocyanate, and dimer acid diisocyanate, examples of the alicyclic polyisocyanates include 1,3-bis(isocyanatomethyl)cyclohexane, 1,4-bis(isocyanatomethyl)cyclohexane, 3-isocyanatomethyl-3,3,5-trimethylcyclohexane(isophorone diisocyanate), bis-(4-isocyanatocyclohexyl)methane (hydrogenated MDI), and norbornane diisocyanate, examples of the aromatic polyisocyanates include 2,4'-diphenylmethane diisocyanate, 4,4'-diphenylmethane diisocyanate, crude MDI, 1,4-phenylene diisocyanate, 2,4-tolylene diisocyanate, 2,6-tolylene diisocyanate, 3,3'-dimethyl-4,4'-diisocyanatobiphenyl, 3,3'-dimethyl-4,4'-diisocyanatodiphenylmethane, and 1,5-naphthylene diisocyanate, and examples of the aroaliphatic polyisocyanates include 1,3-xylylene diisocyanate, 1,4-xylylene diisocyanate, and α,α,α',α'-tetramethylxylylene diisocyanate, and it is also preferred to use modified isocyanates obtained by reaction of these compounds, for example, by adduct-type polyisocyanato or reaction products obtained byurethodionation reaction, isocyanuratization reaction, carbodiimidation reaction, uretonimiation reaction, or biuretization reaction, and mixtures thereof.

As the blocking agent to be introduced into the isocyanate compound, a compound having one or more active hydrogen in the molecule may be used, and the blocking agent may be used singly or in combination of two or more kinds as appropriate. Examples of the blocking agent include alcohol compounds, alkylphenol compounds, phenol compounds, active methylene compounds, mercaptan compounds, acid amide compounds, acid imide compounds, imidazole compounds, imidazoline compounds, triazole compounds, carbamic acid compounds, urea compounds, oxime compounds, amine compounds, imide compounds, imine compounds, pyrazole compounds, and bisulfites. Among these, acid amide compounds, active methylene compounds, oxime compounds, and pyrazole compounds are preferred, and ε-caprolactam, acetylacetone, diethyl malonate, methylethylketone oxime, cyclohexanone oxime, 3-methylpyrazole, 3,5-dimethylpyrazole and the like can be preferably used.

### (Aqueous emulsion)

The water repellent treatment agent of the present invention is featured by comprising a hybrid emulsion containing both a water repellent component and a crosslinking component in one particle of an aqueous emulsion. The configuration "containing both a water repellent component and a crosslinking component in one particle of an aqueous emulsion" can be realized, for example, mainly by the following two measures.

The first measure is to make the crosslinking component contained in the water repellent treatment agent function also as an emulsifier for the water repellent component, and obtains an aqueous emulsion containing both a water repellent component and a crosslinking component in one particle by forming an emulsion particle in such a form that the crosslinking component functioning as the emulsifier involves the non-hydrophilic water repellent component. In this case, since the crosslinking component requires having self-emulsifiability, it is preferred to use a blocked isocyanate having self-emulsifiability as described above as the crosslinking component.

The second measure is to prepare an aqueous emulsion containing both a water repellent component and a crosslinking component in one particle by emulsifying the water repellent component and the crosslinking component at once by using a surfactant.

Whether the aqueous emulsion is a hybrid emulsion can be confirmed, for example, by a method as described in Shikizai, 70[11], 709-716 (1997). Specifically, the hybrid emulsion is quickly frozen with liquid nitrogen, and vacuum dried, and then particles are directly observed by SEM. Regarding composition analysis, the emulsion is fixed by liquid nitrogen freezing and vacuum dried in the same manner as in the SEM observation, and then molded into a pellet form with a tablet molding device for FTIR, and then subjected to the composition analysis using an X-ray photoelectron spectrometer (XPS).

The water repellent treatment agent of the present invention is an aqueous emulsion, and the ratio between the water repellent component and the crosslinking component in solids in the water repellent treatment agent is preferably 20 to 90% by mass of the water repellent component and 10 to 80% by mass of the crosslinking component, more preferably 30 to 85% by mass of the water repellent component and 15 to 70% by mass of the crosslinking component, further preferably 40 to 80% by mass of the water repellent component and 20 to 60% by mass of the crosslinking component, and particularly preferably 55 to 80% by mass of the water repellent component and 20 to 45% by mass of the crosslinking component. When the water repellent component falls within the above range, adequate water repellency is obtained, and when the crosslinking component falls within the above range, laundry durability with excellent water repellency is obtained without impairment of the water repellency. Non-limiting percentage of solids in the aqueous emulsion is preferably 20 to 60% by mass. Non-limiting particle diameter in the aqueous emulsion is preferably 10 µm or less, and more preferably 1 µm or less by mean particle diameter. When the mean particle diameter exceeds 10 µm, the stability of the emulsion tends to decrease. The mean particle diameter is measured by a laser diffraction/scattering particle diameter distribution measuring device, and a particle diameter at which the integrated percentage (volumetric basis) is 50% (median particle size) is determined as a mean particle diameter (µm).

Also, the water repellent treatment agent of the present invention may contain a surfactant in addition to the water repellent component and the crosslinking component. In particular, when the blocked isocyanate which is the crosslinking component does not have self-emulsifiability, a surfactant is used so as to make the water repellent treatment agent into an aqueous emulsion. When a surfactant is contained, as the surfactant, one or a plurality of a nonionic surfactant, an anionic surfactant, a cationic surfactant and an amphoteric surfactant can be used.

Examples of the nonionic surfactant include polyoxyethylene alkyl ethers, polyoxyethylene alkylphenyl ethers, polyoxyethylene fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, sucrose fatty acid esters, polyoxyethylene alkyl amines, polyoxyethylene fatty acid amides, fatty acid alkylol amides, alkyl alkanol amides, acetylene glycol, an oxyethylene adduct of acetylene glycol, and a block copolymer of polyethylene glycol and polypropylene glycol. Examples of the anionic surfactant include sulfonate ester salts of higher alcohol, higher alkyl sulfonate salts, higher carboxylate salts, alkylbenzene sulfonate salts, polyoxyethylene alkyl sulfate salts, polyoxyethylene alkyl phenyl ether sulfate salts, and vinyl sulfosuccinate. Examples of the cationic surfactant include amine salts, amide amine salts, quaternary ammonium salts, and imidazolinium salts. Specific examples include, but are not limited to, alkyl amine salts, polyoxyethylene alkyl amine salts, alkyl amide amine salts, amino alcohol fatty acid derivatives, polyamine fatty acid derivatives, amine salt type surfactants such as imidazoline, alkyltrimethyl ammonium salts, dialkyldimethyl ammonium salts, alkyldimethylbenzyl ammonium salts, alkyl pyridinium salts, alkyl isoquinolinium salts, and quaternary ammonium salt type surfactants such as benzethonium chloride. Examples of the amphoteric surfactant include alkyl amine oxides, alanines, imidazolinium betaines, amide betaines, and betaine acetate, and specific examples include long-chain amine oxide, lauryl betaine, stearyl betaine, laurylcarboxymethyl hydroxyethyl imidazolinium betaine, lauryldimethyl aminoacetic acid betaine, and fatty acid amide propyldimethylamino acetic acid betaine.

While the use amount of these surfactants is not particularly limited as long as emulsification is enabled and the water repellency and the laundry durability are not impaired, for example, the use amount is preferably 1 to 20% by mass, and more preferably 1.5 to 10% by mass in solids of the emulsion.

Also, the water repellent treatment agent of the present invention may include any water repellent free of fluorine that is commercially available as long as the effect of the present invention arises, such as, for example, an acrylate water repellent, a wax water repellent, a silicone water repellent, or an acryl-silicone water repellent. Among these, an acrylate water repellent or an acryl-silicone water repellent is particularly preferred as the water repellent to be included because more water drops repelled by the test cloth during the water repellency test fly outside, and the strength of repelling water is improved.

The mixing amount of the water repellent free of fluorine is preferably 1 to 99% by mass, more preferably 5 to 95% by mass, further preferably 10 to 90% by mass, and particularly preferably 15 to 85% by mass in solids of the water repellent treatment agent of the present invention.

As the acrylate compound, a (meth)acrylate polymer obtained by polymerizing a (meth)acrylate monomer can be used. The (meth)acrylate monomer preferably has an ester moiety having 12 or more carbon atoms, and the ester moiety is preferably a hydrocarbon group. The hydrocarbon group may be straight-chained or branched, and may be a saturated hydrocarbon or a unsaturated hydrocarbon, and may have an alicyclic or aromatic ring. Among these, those having a straight chain are preferred, and those being a straight-chain alkyl group are more preferred.

The number of carbon atoms in the ester moiety is preferably 12 to 30. When the number of carbon atoms is less than 12, adequate water repellency cannot be exerted as the water repellent treatment agent. On the other hand, when the number of carbon atoms is more than 30, the handling can be rough and rigid. The number of carbon atoms in the ester moiety is more preferably 12 to 21. When the number of carbon atoms falls within this range, the water repellency and the handling are especially excellent. Those particularly preferred as the ester moiety are straight-chain alkyl groups having 12 to 18 carbon atoms.

Examples of the (meth)acrylate monomer include lauryl acrylate, hexadecyl acrylate, stearyl acrylate, isostearyl acrylate, behenyl acrylate, lauryl methacrylate, hexadecyl methacrylate, stearyl methacrylate, isostearyl methacrylate, and behenyl methacrylate, and one or a plurality of these can be used.

Examples of the monomer in the case of having a cyclic structure in the ester moiety include benzyl (meth)acrylate, cyclohexyl (meth)acrylate, isobornyl (meth)acrylate, phenoxyethyl (meth)acrylate, naphthyl (meth)acrylate, 4-morpholinoethyl (meth)acrylate, tetrahydrofurfuryl (meth)acrylate, dicyclopentanyl (meth)acrylate, dicyclopentenyloxyethyl (meth)acrylate, tetramethylpiperidinyl methacrylate, and glycidyl (meth)acrylate, and one or a plurality of these can be used.

It is preferred that a cross-linkable functional group is contained as the (meth)acrylate monomer. Examples of the functional group include a hydroxyl group, an epoxy group, a chloromethyl group, a blocked isocyanate group, an amino group, and a carboxyl group, and specific examples include diacetone (meth)acrylamide, N-methylol (meth)acrylamide, hydroxymethyl (meth)acrylate, hydroxyethyl (meth)acrylate, 3-chloro-2-hydroxypropyl (meth)acrylate, 2-acetoacetoxyethyl (meth)acrylate, vinyl monochloroacetate, glycidyl (meth)acrylate, and 2-[(3,5-dimethylpyrazolyl)carbonylamino]ethyl methacrylate. One or a plurality of these can be used.

There is no restriction for the copolymer obtained from the monomer to contain a repetitive unit derived from other monomer. It is preferred that a radical reactive organo polysiloxane macromonomer is contained as the monomer. The radical reactive organo polysiloxane macromonomer may have one or two radical reactive group(s) in one molecule, and particularly preferably has one radical reactive group in one molecule. Examples of the radical reactive group include an azo group, a mercapto group, a vinyl group, a styryl group, and a (meth)acryloyl group, and at least one of these can be used. As the reactive group, a (meth)acryloyl group is preferred for the ease of radical copolymerization, the ease of synthesis, and the availability of commercial items. As such a radical reactive organo polysiloxane macromonomer, a commercial item can be selected and used. For example, X-22-174ASX, X-22-174BX, X-22-2426, KF-2012 and the like available from Shin-Etsu Chemical Co., Ltd. can be used.

Examples of the monomer include other polymerizable monomers than (meth)acrylate monomers, and other macromonomers excluding organo polysiloxane having a radical reactive group. Examples include styrene, vinyl chloride, vinylidene chloride, ethylene, vinyl acetate, vinylalkyl ether, acrylonitrile, alkylol acrylamide, maleic acid diester, and (meth)acrylic acid methoxy polyalkylene glycol. Other monomers are not limited to these examples.

The water repellent treatment agent may contain a homopolymer or a copolymer of the aforementioned monomers as a water repellent. For example, a copolymer of stearyl acrylate and glycidyl methacrylate, or a copolymer of stearyl acrylate, a radical reactive organo polysiloxane macromonomer, and a (meth)acrylate having a hydroxyl group can be preferably used as an acrylate water repellent or as an acryl-silicone water repellent.

The water repellent treatment agent of the present invention may contain a zirconium compound that is known as a water repellent assistant component, and zirconium acetate, zirconium hydrochloride, and zirconium nitrate are particularly preferred.

Also, the water repellent treatment agent of the present invention may contain any additive besides the above as long as the effect of the present invention arises. Examples of the additive include agents for fibers such as an anti-slip agent, an anticrease agent, a flame retarder, an antistatic agent, and an anti-heat agent, an antioxidant, an ultraviolet absorber, a pigment, a metal powder pigment, a rheology control agent, a hardening accelerator, a deodorizer, and an antibacterial agent. These additives can be used singly or in appropriate combination of two or more of these additives.

### (Method for producing water repellent treatment agent)

The water repellent treatment agent of the present invention is featured by containing a water repellent component and a crosslinking component in one particle of an aqueous emulsion, and can be produced, for example, in the following procedure.
(I) An isocyanate compound, a hydrophilic compound capable of reacting with an isocyanate group of the isocyanate compound, and a blocking agent capable of reacting with an isocyanate group of the isocyanate compound are reacted until the NCO content becomes 0% to obtain a blocked isocyanate.
(II) In a liquid containing the blocked isocyanate obtained in the above (I), a water repellent component and water are added and mixed, to obtain an emulsion.
(III) An organic solvent is removed from the emulsion obtained in the above (II) to obtain an aqueous emulsion containing the blocked isocyanate and the water repellent component.

In the step (I), the above-described compounds can be used as the isocyanate compound, and as the hydrophilic compound capable of reacting with an isocyanate group, the above-described polyethylene glycol monoalkyl ether or the like can be used. The reaction of the isocyanate compound, the hydrophilic compound or the blocking agent can be performed in a known method, and can be performed regardless of existence of a solvent. When a solvent is used, it is necessary to use a solvent that is inert to an isocyanate group. In the blocking reaction, an organic metal salt, a metal alcoholate and a tertiary amine and the like of tin, zinc, lead or the like may be used as a catalyst. The blocking reaction can be performed generally at -20 to 150°C, and preferably at 0 to 100°C. At temperatures exceeding 150°C, a side reaction can occur, whereas too low temperatures are disadvantageous because the reaction speed decreases. In the blocked isocyanate, it suffices that 50 mol% or more of the isocyanate groups are blocked by the blocking agent, and preferably 75 mol% or more of the isocyanate groups are blocked, and particularly preferably 90 mol% or more of the isocyanate groups are blocked.

It is preferred that 1 to 50 mol% of the hydrophilic compound is introduced to the isocyanate groups. Since the hydrophilic compound is introduced into part of the isocyanate groups, the blocked isocyanate has self-emulsifiability, and it is possible to provide a water repellent treatment agent containing a water repellent component and a crosslinking component in one particle without using a surfactant or using a small amount of a surfactant.

It is preferred that the reaction of the step (I) is performed until the NCO content becomes 0%. The NCO content can be measured by a known method such as the method described, for example, in JIS K 6806:2003, 5.10 NCO amount, and 0% can be such a degree that almost all of the NCO groups are determined to have substantially disappeared, and can be a detection limit or less in a known measuring method, or within a range regarded as equivalent to the same.

Examples of the solvent of the reaction system include acetone, methylethyl ketone, methylisobutyl ketone, ethyl acetate, n-butyl acetate, Cellosolve acetate, and toluene. These solvents can be used singly or in appropriate combination of two or more of these solvents.

In the step (II), as the water repellent component, those described above can be used, and it is particularly preferred to use a silicone compound. An organic solvent may be added in combination with a water repellent component. It is preferred to add water after confirming that the reaction liquid (liquid containing blocked isocyanate) of the step (I) and a water repellent component, and an organic solvent are uniformly mixed. By stirring while dropping water, an emulsion can be obtained.

In the step (III), as the method for removing an organic solvent from the emulsion, a known method can be appropriately selected, and the method can be, for example, by distilling off under reduced pressure.

Also, the water repellent treatment agent of the present invention can be obtained by a method for producing a water repellent treatment agent, including the steps of:
(a) reacting an isocyanate compound, and
   a blocking agent capable of reacting with an isocyanate group of the isocyanate compound until an NCO content becomes 0% to obtain a blocked isocyanate;
(b) adding and mixing a water repellent component, a surfactant, and water to a liquid containing the blocked isocyanate obtained in the step (a) to obtain an emulsion; and
(c) removing an organic solvent from the emulsion obtained in the step (b) to obtain an aqueous emulsion containing the blocked isocyanate and the water repellent component.

The isocyanate compound and the blocking agent used in the step (a) are as described above. The NCO content can be measured by a known method such as the method described, for example, in JIS K 6806:2003, 5.10 NCO amount, and 0% can be such a degree that almost all of the NCO groups are determined to have substantially disappeared, and can be a detection limit or less in a known measuring method, or within a range regarded as equivalent to the same. The solvent used in the reaction system is not particularly limited as long as the solvent can make the reaction proceed uniformly in the reaction system, and for example, a solvent equivalent to the solvent in the step (I) can be used.

In the step (b), it is more preferred to use a hydrocarbon compound as the water repellent component although those described above can be used as the water repellent component and the surfactant. It is also preferred to add an organic solvent in combination with the water repellent component. The surfactant may be preliminarily dissolved or dispersed in water, and the solution or the dispersion may be added by a method such as dropping, or may preliminarily dissolved or dispersed in an organic solvent together with the water repellent component. In mixing, a known emulsifier can be used, and an emulsifier such as a homomixer, a homogenizer, a colloid mill, or a line mixer can be used. In such a production method, since a mixed solution in which the water repellent component and the crosslinking component are mixed is compulsorily emulsified with a surfactant, it is considered that the water repellent component and the crosslinking component are contained in one particle in the emulsion, and thus high water repellency and laundry durability are obtained.

In the step (c), as the method for removing an organic solvent from the emulsion, a known method can be appropriately selected, and the method can be, for example, by distilling off under reduced pressure.

### (Water repellent treatment)

A water repellent treatment can be conducted for a cloth by a known method using a water repellent treatment agent of the present invention. Examples of the treatment method include a continuous method or a batch method. In a continuous method, first, the water repellent treatment agent of the present invention is diluted in water to prepare a processing liquid. In preparing a processing liquid, it is preferred to optionally add various agents such as a cross-linker besides water. Then, an object to be treated (namely, a fiber product) is continuously fed to an impregnator filled with the processing liquid, and after the object to be treated is impregnated with the processing liquid, unnecessary processing liquid is removed. The impregnator is not particularly limited, and examples of the impregnator that can be preferably employed include a padder, a kiss-roll type applicator, a gravure coater type applicator, a spray type applicator, a foam type applicator, and a coating type applicator, and a padder type is particularly preferred. Subsequently, an operation of removing the water remaining in the object to be treated is conducted by using a drier. The drier is not particularly limited, and an open width drier such as a hot-flue or a tenter is preferred. The continuous method is employed preferably when the object to be treated is a cloth such as woven fabrics. The batch method includes the step of dipping an object to be treated in a processing liquid, and the step of removing water remaining in the object to be treated that has been subjected to the treatment. The batch method is employed preferably when the object to be treated is not a cloth, for example, when the object to be treated is loose wool, top, sliver, reel, tow, yarn and the like, or when the object to be treated is not suited for the continuous method as is the case of knitted fabrics. In the step of dipping, for example, a cotton dyeing machine, a cheese dyeing machine, a jet dyeing machine, an industrial laundry machine, a beam dyeing machine and the like can be used. In the operation of removing water, a hot-air drier such as a cheese drier, a beam drier, or a tumble drier, a high-frequency drier and the like can be used. The object to be treated to which the water repellent treatment agent of the present invention has been attached is preferably subjected to a dry heating treatment. The temperature of the dry heating treatment is preferably 120 to 180°C, and particularly preferably 160 to 180°C. The time of the dry heating treatment is preferably 10 seconds to 3 minutes, and particularly preferably 1 to 2 minutes. While the method of the dry heating treatment is not particularly limited, a tenter is preferred when the object to be treated is a cloth. It is considered that the blocking agent of the blocked isocyanate thermally dissociates in the heat treatment step, and a regenerated isocyanate group and a water repellent component or fibers react and bind with each other.

The water repellent treatment agent of the present invention widely imparts water repellency and laundry durability to natural fibers such as cotton, silk, hemp, and wool, synthetic fibers such as polyester, nylon, acryl, and spandex, and fiber products in which such fibers are used. The form and shape of the object to be treated are not particularly limited, and not only the shape of the material, such as staple, filament, tow, and yarn, but also various processed forms including woven fabric, knitted product, padding, nonwoven fabric, paper, sheet, film and the like are objects that can be treated with the fiber treatment agent composition of the present invention.

### EXAMPLES

Hereinafter, the present invention is described more specifically by Examples, however, the present invention is not limited to these Examples.

### (Production of water repellent treatment agent)

### [Production Example 1]

In a separable flask, 175 g (NCO group 0.56 mol) of CORONATE L (trimethylol propane adduct of tolylene diisocyanate, available from Tosoh Corporation, NCO% = 13.4, solids 75% ethyl acetate solution) and 40 g of acetone were added and stirred. Then, 47 g (0.54 mol) of methylethyl ketone oxime was slowly added with a dropping funnel, and caused to react for 1 hour at 50 to 55°C. Then, 30 g (0.02 mol) of UNIOX M-2000 (polyethylene glycol monomethyl ether having a mean molecular weight of 2000, available from NOF Corporation, solids 100%), 11 mg of diazabicycloundecene and 50 g of acetone were added, and caused to react at 60°C for 2 hours, and after confirming that the NCO content became 0%, the reaction was watercooled to 40°C. Then 304 g (amino group 0.08 mol) of WACKER FINISH WR 301 (amino-modified silicone, available from Wacker Asahikasei Silicone Co., Ltd., amine equivalent 3700, solids 100%) and 170 g of acetone were added, and after confirming that the solution was uniformized, 610 g of ion exchange water was slowly dropped to emulsify the solution. After completion of the emulsification, the solvent was distilled off under reduced pressure, and 5.5 g of 90% acetic acid and ion exchange water were added to obtain an emulsion having a solids concentration of 30%. The emulsion had a mean particle diameter of 0.24 µm. The mean particle diameter is a particle diameter at which the integrated percentage (volumetric basis) is 50% (median particle size), measured by a laser diffraction/scattering particle diameter distribution measuring device LA-300 (available from HORIBA, Ltd.) (the same applies in the following Production Examples).

The emulsion of Production Example 1 is a hybrid emulsion containing silicone which is a water repellent component, and a blocked isocyanate which is a crosslinking component in a ratio of 59 : 41 (parts by mass). The blocked isocyanate contained in Production Example 1 has such a structure that polyethylene glycol monomethyl ether is introduced into part of the structure, and has self-emulsifiability.

### [Production Example 2]

In a separable flask, 175 g (NCO group 0.56 mol) of CORONATE L (trimethylol propane adduct of tolylene diisocyanate, available from Tosoh Corporation, NCO% = 13.4, solids 75% ethyl acetate solution) and 40 g of acetone were added and stirred. Then, 47 g (0.54 mol) of methylethyl ketone oxime was slowly added with a dropping funnel, and caused to react for 1 hour at 50 to 55°C. Then, 30 g (0.02 mol) of UNIOX M-2000 (polyethylene glycol monomethyl ether having a mean molecular weight of 2000, available from NOF Corporation, solids 100%), 11 mg of diazabicycloundecene and 50 g of acetone were added, and caused to react at 60°C for 2 hours, and after confirming that the NCO content became 0%, the reaction was watercooled to 40°C. Then 165 g (amino group 0.04 mol) of WACKER FINISH WR 301 (amino-modified silicone, available from Wacker Asahikasei Silicone Co., Ltd., amine equivalent 3700, solids 100%) and 98 g of acetone were added, and after confirming that the solution was uniformized, 440 g of ion exchange water was slowly dropped to emulsify the solution. After completion of the emulsification, the solvent was distilled off under reduced pressure, and 3.0 g of 90% acetic acid and ion exchange water were added to obtain an emulsion having a solids concentration of 30%. The emulsion had a mean particle diameter of 0.22 µm.

The emulsion of Production Example 2 is a hybrid emulsion containing silicone which is a water repellent component, and a blocked isocyanate which is a crosslinking component in a ratio of 44 : 56 (parts by mass). The blocked isocyanate contained in Production Example 2 has such a structure that polyethylene glycol is introduced into part of the structure, and has self-emulsifiability.

### [Production Example 3]

In a beaker, 210 g of WACKER FINISH WR 301 (amino-modified silicone, available from Wacker Asahikasei Silicone Co., Ltd., amine equivalent 3700, solids 100%), 45 g of Softanol 50 (higher alcohol ethoxylate, available from NIPPON SHOKUBAI CO., LTD.) and 45 g of Blaunon EL-1507 (polyoxyethylene lauryl ether, available from AOKI OIL INDUSTRIAL Co., Ltd.) were added and heated to 50°C. Then, 700 g of ion exchange water and 4 g of 90% acetic acid were added, to obtain a silicone emulsion having a solids concentration of 30%. The emulsion had a mean particle diameter of 0.11 µm.

The emulsion of Production Example 3 contains only silicone which is a water repellent component and does not contain crosslinking component. Also, the emulsion is not a hybrid emulsion.

### <Examples 1 to 6 and Comparative Examples 1, 2>

Each emulsion prepared in Production Examples 1 to 3 was formulated according to Table land processed, and the initial water repellency and the laundry durability were evaluated. A cloth to be processed (test cloth) and a processing condition, an evaluation method and an evaluation criterion are as follows.

### [Test cloth]

I: PET taffeta (basis weight 65 g/m²)
II: Nylon high-density taffeta (basis weight 60 g/m²)
III: Nylon Taslan (basis weight 133 g/m²)
IV: Cotton broad dyed cloth (basis weight 110 g/m²)

### [Processing condition]

By a continuous method, various cloths were caused to pass through a processing liquid, and an unnecessary solution was wrung out with a mangle at a constant pressure, and dried at 110°C for 1.5 minutes, and then cured at 170°C for 1 minute. The pickups were I: 30%, II: 42%, III: 59%, and IV: 64%. As shown in Table 1, a cross-linker (Meikanate PRO: blocked isocyanate, available from Meisei Chemical Works, Ltd., solids 20%) was further used together depending on the condition.

### [Water repellency]

The obtained processed cloth was evaluated according to JIS L 1092:2009, 7.2 Water repellency test (spray test). The evaluation was made according to the following criterion, and for when the performance was slightly superior, "+"was appended to the grade, and when the performance was slightly inferior, "-" was appended to the grade.
5: Surface lacking moistness and adhesion of water drop
4: Surface lacking moistness but showing adhesion of small water drop
3: Surface showing moistness in the form of small individual water drops
2: Half of surface showing moistness, and small individual water drops penetrating cloth
1: Entire surface showing moistness

### [Laundry durability (20 times washing)]

For the obtained processed cloth, washing was conducted according to JIS L 0217 (1995), appendix table 1, Method 103, and for the obtained washed cloth, the aforementioned water repellency test was conducted.

**[Table 1]**

| | | | Example 1 | Example 2 | Example 3 | Example 4 | Example 5 | Example 6 | Comparative Example 1 | Comparative Example 2 |
|---|---|---|---|---|---|---|---|---|---|---|
| Processing liquid | Production Example 1 (water repellent component 59/crosslinking component 41) | | 5% | 10% | 5% | 10% | - | - | - | - |
| | Production Example 2 (water repellent component 44/crosslinking component 56) | | - | - | - | - | 5% | 10% | - | - |
| | Production Example 3 (water repellent component 100/crosslinking component 0) | | - | - | - | - | - | - | 5% | 10% |
| | Cross-linker | | - | - | 1% | 1% | 1% | 1% | 1% | 1% |
| | Tap water | | 95% | 90% | 94% | 89% | 94% | 89% | 94% | 89% |
| Evaluation of water repellency | Initial | Test cloth I | 4+ | 5 | 5 | 5 | 4 | 5 | 3 | 3 |
| | | Test cloth II | 4+ | 5 | 5 | 5 | 4+ | 5 | 3 | 2 |
| | | Test cloth IV | 5 | 5 | 5 | 5 | 4+ | 5 | 3- | 1 |
| | After 20 times washing | Test cloth I | 3 | 4- | 4- | 4+ | 3+ | 4- | 1 | 1 |
| | | Test cloth II | 2+ | 4- | 3+ | 4+ | 3 | 4- | 1 | 1 |
| | | Test cloth IV | 2+ | 3- | 3 | 3 | 3- | 3 | 1 | 1 |

As shown in Table 1, in any of Examples 1 to 6 for each of which a treatment was conducted using a water repellent treatment agent which is an example of the present invention, the initial water repellency was high, and the water repellency was maintained after 20 times washing. In contrast, in Comparative Examples 1, 2 using Production Example 3 in which a cross-linker is not contained in the water repellent treatment agent, adequate initial water repellency and laundry durability were not obtained even when the cross-linker was used together and the use amount of the water repellent treatment agent was increased.

### [Production Example 4]

In a separable flask, 15 g (NCO group 0.08 mol) of DURANATE 24A-100 (biuret of hexamethylene diisocyanate, available from Asahi Kasei Chemicals Corporation, NCO% = 23.5) and 10 g of methylisobutyl ketone (MIBK) were added and stirred. To this, 8.1 g (0.08 mol) of 3,5-dimethylpyrazole was added and heated at 50°C, and caused to react until the isocyanate content became 0%, and thus a blocked isocyanate was obtained.

Then, 65 g (OH group 0.08 mol) of EMASOL S-30V (sorbitan tristearate, available from Kao Corporation, hydroxyl value 68.6 mg KOH/g) and 75 g of MIBK were added and dissolved at 60°C. In 150 g of ion exchange water, 2.8 g of dimethylstearyl amine, 1.9 g of acetic acid (90% aqueous solution) and 1.4 g of Tergitol TMN-10 (polyethylene glycol trimethylnonyl ether, available from The Dow Chemical Company, 90% aqueous solution) were dissolved at 60°C and the resultant solution was dropped. The solution was then emulsified by a high-pressure homogenizer (400 bar) while the temperature was kept. Then 80 g of ion exchange water was added, and MIBK was distilled off under reduced pressure. Lastly the solids concentration was adjusted to 30% with ion exchange water to obtain an emulsion. The emulsion had a mean particle diameter of 0.17 µm.

The emulsion of Production Example 4 contains sorbitan tristearate which is a water repellent component and blocked isocyanate which is a crosslinking component in a ratio of 74 : 26 (parts by mass). Production Example 4 is a hybrid emulsion in which the water repellent component and the crosslinking component are emulsified by Tergitol TMN-10 which is a nonionic surfactant and dimethylstearyl amine acetate which is a cationic surfactant.

### [Production Example 5]

In a separable flask, 15 g (NCO group 0.08 mol) of DURANATE 24A-100 (biuret of hexamethylene diisocyanate, available from Asahi Kasei Chemicals Corporation, NCO%=23.5) and 10 g of methylisobutyl ketone (MIBK) were added and stirred. To this, 8.1 g (0.08 mol) of 3,5-dimethylpyrazole was added and heated at 50°C, and caused to react until the isocyanate content became 0%, and thus a blocked isocyanate was obtained.

Then, 66 g (OH group 0.08 mol) of EMASOL S-30V (sorbitan tristearate, available from Kao Corporation, hydroxyl value 68.6 mg KOH/g) and 76 g of MIBK were added and dissolved at 60°C. In 216 g of ion exchange water, 2.8 g of stearyl amine 30EO adduct, and 0.91 g of acetic acid (90% aqueous solution) were dissolved at 60°C and the resultant solution was dropped. The solution was then emulsified by a high-pressure homogenizer (400 bar) while the temperature was kept. Then, MIBK was distilled off under reduced pressure, and ion exchange water was added to obtain an emulsion having a solids concentration of 30%. The emulsion had a mean particle diameter of 0.15 µm.

The emulsion of Production Example 5 contains sorbitan tristearate which is a water repellent component and blocked isocyanate which is a crosslinking component in a ratio of 74 : 26 (parts by mass). Production Example 5 is a hybrid emulsion in which the water repellent component and the crosslinking component are emulsified by acetate of stearyl amine 30EO adduct having the natures of a nonionic surfactant and a cationic surfactant.

### [Production Example 6]

In a separable flask, 15 g (NCO group 0.08 mol) of DURANATE 24A-100 (biuret of hexamethylene diisocyanate, available from Asahi Kasei Chemicals Corporation, NCO%=23.5) and 10 g of methylisobutyl ketone (MIBK) were added and stirred. To this, 8.1 g (0.08 mol) of 3,5-dimethylpyrazole was added and heated at 50°C, and caused to react until the isocyanate content became 0%, and thus a blocked isocyanate compound was obtained.
Then, 66 g (OH group 0.08 mol) of EMASOL S-30V (sorbitan tristearate, available from Kao Corporation, hydroxyl value 68.6 mg KOH/g), 16 g of BELSIL SDM 5055 VP (alkyl-modified silicone, available from Wacker Asahikasei Silicone Co., Ltd.) and 91 g of MIBK were added and dissolved at 60°C. In 255 g of ion exchange water, 3.3 g of stearyl amine 30EO adduct, and 1.07 g of acetic acid (90% aqueous solution) were dissolved at 60°C and the resultant solution was dropped. The solution was then emulsified by a high-pressure homogenizer (400 bar) while the temperature was kept. Then, MIBK was distilled off under reduced pressure, and ion exchange water was added to obtain an emulsion having a solids concentration of 30%. The emulsion had a mean particle diameter of 0.15 µm.

The emulsion of Production Example 6 contains sorbitan tristearate and alkyl-modified silicone which are a water repellent component, and blocked isocyanate which is a crosslinking component in a ratio of 78 : 22 (parts by mass). The water repellent component contains sorbitan tristearate having a functional group capable of reacting with the crosslinking component, and alkyl-modified silicone not having a functional group capable of reacting with the crosslinking component in a ratio of 80.5 : 19.5 (parts by mass). Production Example 6 is a hybrid emulsion in which the water repellent component and the crosslinking component are emulsified by acetate of stearyl amine 30EO adduct having the natures of a nonionic surfactant and a cationic surfactant.

### [Production Example 7]

After adding 65 g of EMASOL S-30V (sorbitan tristearate, available from Kao Corporation, hydroxyl value 68.6 mg KOH/g) and 75 g of MIBK, they were dissolved at 60°C. In 150 g of ion exchange water, 2.8 g of dimethylstearyl amine, 1.9 g of acetic acid (90% aqueous solution) and 1.4 g of Tergitol TMN-10 (polyethylene glycol trimethylnonyl ether, available from The Dow Chemical Company, 90% aqueous solution) were dissolved at 60°C and the resultant solution was dropped. The solution was then emulsified by a high-pressure homogenizer (400 bar) while the temperature was kept. Then, MIBK was distilled off under reduced pressure, and ion exchange water was added to obtain an emulsion having a solids concentration of 30%. The emulsion had a mean particle diameter of 0.16 µm.

The emulsion of Production Example 7 is an emulsion containing sorbitan tristearate which is a water repellent component and does not contain a crosslinking component. Also, the emulsion is not a hybrid emulsion.

### [Production Example 8]

In a separable flask, 70 g (OH group 0.09 mol) of EMASOL S-30V (sorbitan tristearate, available from Kao Corporation, hydroxyl value 68.6 mg KOH/g) and 80 g of MIBK were added and heated at 50°C. Then, 17 g (NCO group 0.09 mol) of DURANATE 24A-100 (biuret of hexamethylene diisocyanate, available from Asahi Kasei Chemicals Corporation, NCO% = 23.5) and 10 mg of diazabicycloundecene were added, and the temperature was raised to 80°C, and the reaction was caused until the isocyanate content became 0%. In 167 g of ion exchange water, 3.1 g of dimethylstearyl amine, 2.1 g of acetic acid (90% aqueous solution) and 1.6 g of Tergitol TMN-10 (polyethylene glycol trimethylnonyl ether, available from The Dow Chemical Company, 90% aqueous solution) were dissolved at 60°C and the resultant solution was dropped. The solution was then emulsified by a high-pressure homogenizer (400 bar) while the temperature was kept. Then 50 g of ion exchange water was added, and MIBK was distilled off under reduced pressure. Lastly the solids concentration was adjusted to 30% with ion exchange water to obtain an emulsion. The emulsion had a mean particle diameter of 0.17 µm.

The emulsion of Production Example 8 is an emulsion containing a urethane compound that is a reactant of sorbitan tristearate which is a water repellent component and an isocyanate compound which is a crosslinking component, and is not a hybrid emulsion containing a water repellent component and a crosslinking component (blocked isocyanate).

### <Examples 7 to 12 and Comparative Examples 3 to 7>

Each emulsion prepared in Production Examples 4 to 8 was formulated according to Table 2 and processed, and the initial water repellency and the laundry durability were evaluated. A cloth to be processed (test cloth) and a processing condition, an evaluation method and an evaluation criterion are as described above.

**[Table 2]**

| | | | Example 7 | Example 8 | Example 9 | Example 10 | Example 11 | Example 12 | Comparative Example 3 | Comparative Example 4 | Comparative Example 5 | Comparative Example 6 | Comparative Example 7 |
|---|---|---|---|---|---|---|---|---|---|---|---|---|---|
| Processing liquid | Production Example 4 (water repellent component 74/crosslinking component 26) | | 5% | 10% | 10% | - | - | - | - | - | - | - | - |
| | Production Example 5 (water repellent component 74/crosslinking component 26) | | - | - | - | 5% | 10% | - | - | - | - | - | - |
| | Production Example 6 (water repellent component 78/crosslinking component 22) | | - | - | - | - | - | 5% | - | - | - | - | - |
| | Production Example 7 (water repellent component 100/crosslinking component 0) | | - | - | - | - | - | - | 5% | 10% | - | - | - |
| | Production Example 8 (urethane emulsion) | | - | - | - | - | - | - | - | - | 5% | 10% | 10% |
| | Cross-linker | | 1% | 2% | - | 1% | 2% | 1% | 1% | 2% | 1% | 2% | - |
| | Tap water | | 94% | 88% | 90% | 94% | 88% | 94% | 94% | 88% | 94% | 88% | 90% |
| Evaluation of water repellency | Initial | I | 5 | 5 | 5- | 5 | 5 | 5 | 1+ | 1+ | 4 | 5 | 4 |
| | | III | 5 | 5 | 5 | 5 | 5 | 5 | 3- | 3 | 5 | 5 | 5- |
| | | IV | 5 | 5 | 5 | 5 | 5 | 5 | 2 | 2+ | 5 | 5 | 4+ |
| | After 20 times washing | I | 3 | 4 | 2+ | 3 | 3+ | 3+ | 1 | 1 | 3 | 4- | 1 |
| | | III | 3 | 3+ | 3- | 3 | 3+ | 3+ | 1+ | 1+ | 3 | 3+ | 1 |
| | | IV | 3 | 3 | 3- | 3 | 3+ | 3+ | 1 | 1+ | 3 | 3 | 1 |

As shown in Table 2, in any of Examples 7 to 12, excellent initial water repellency and laundry durability were obtained. On the other hand, in Comparative Examples 3, 4 in which sorbitan tristearate alone was emulsified, and a cross-linker was used together, adequate water repellency was not obtained. In the case of not adding a cross-linker, the laundry durability was not obtained in the emulsion of Production Example 8 which is a urethane emulsion (Comparative Example 7), however, excellent durability was obtained in the emulsion of Production Example 4 which is a hybrid emulsion (Example 9).

### <Example 13, Comparative Example 8>

Each emulsion prepared in Production Examples 4 and 8 was formulated according to Table 3, and the mechanical stability was evaluated. The mechanical stability is an index for simply evaluating the stability of the emulsion in a liquid where a water repellent processing liquid and anionic resin coexist. The evaluation is based on the fact that an anionic substance existing on the cloth at the time of the water repellent treatment causes deterioration in stability, breakage, and agglomeration of the emulsion, which causes occurrence of a processing trouble such as gum up.

The anionic resin (Dimafix ES, available from Meisei Chemical Works, Ltd.) is added as an anionic impurity that dissolves in the bath.

For preparation of the processing liquid, 5 parts of the water repellent treatment agent emulsion of Production Example 4 or 8, 1 part of a cross-linker (Meikanate PRO: blocked isocyanate, available from Meisei Chemical Works, Ltd., solids 20%), and 93.5 parts of tap water were mixed, and heated to 35°C. Then, 0.5 parts of 1% Dimafix ES aqueous solution (anionic polyhydric phenol resin, available from Meisei Chemical Works, Ltd., prepared to pH 6.0 with soda ash) was added, and stirred at 2500 rpm for 5 minutes with a homomixer, and then filtered with a black polyester cloth, and the mechanical stability was evaluated from the amount of the remaining scum. Less scum is desired, and the one giving a small amount of scum was evaluated as ○, the one giving a slightly large amount of scum was evaluated as △, and the one giving a large amount of scum was evaluated as ×.

**[Table 3]**

| | | Example 13 | Comparative Example 8 |
|---|---|---|---|
| Processing liquid | Production Example 4 (water repellent component 74/crosslinking component 26) | 5 parts | - |
| | Production Example 8 (urethane emulsion) | - | 5 parts |
| | Cross-linker | 1 part | 1 part |
| | Tap water | 93.5 parts | 93.5 parts |
| | Anionic resin | 0.5 parts | 0.5 parts |
| Evaluation | Mechanical stability | ○ | × |

As shown in Table 3, while the processing liquid of Exampled 13 was excellent in mechanical stability even in the presence of the anionic resin, Comparative Example 8 generated a large amount of scum, and was inferior in mechanical stability.

### [Production Example 9]

In a separable flask, 14 g (NCO group 0.08 mol) of DURANATE 24A-100 (biuret of hexamethylene diisocyanate, available from Asahi Kasei Chemicals Corporation, NCO% = 23.5) and 9.2 g of methylisobutyl ketone (MIBK) were added and stirred. To this, 7.4 g (0.08 mol) of 3,5-dimethylpyrazole was added and heated at 50°C, and caused to react until the isocyanate content became 0%, and thus a blocked isocyanate compound was obtained.

Then, 40 g (OH group 0.05 mol) of EMASOL S-30V (sorbitan tristearate, available from Kao Corporation, hydroxyl value 68.6 mg KOH/g) and 52 g of MIBK were added and dissolved at 60°C. In 149 g of ion exchange water, 2.0 g of stearyl amine 30EO adduct, and 0.62 g of acetic acid (90% aqueous solution) were dissolved at 60°C and the resultant solution was dropped. The solution was then emulsified by a high-pressure homogenizer (400 bar) while the temperature was kept. Then, MIBK was distilled off under reduced pressure, and ion exchange water was added to obtain an emulsion having a solids concentration of 30%. The emulsion had a mean particle diameter of 0.16 µm.

The emulsion of Production Example 9 contains sorbitan tristearate which is a water repellent component and blocked isocyanate which is a crosslinking component in a ratio of 65 : 35 (parts by mass). Production Example 9 is a hybrid emulsion in which the water repellent component and the crosslinking component are emulsified by acetate of stearyl amine 30EO adduct having the natures of a nonionic surfactant and a cationic surfactant.

### [Production Example 10]

In a separable flask, 16 g (NCO group 0.09 mol) of DURANATE 24A-100 (biuret of hexamethylene diisocyanate, available from Asahi Kasei Chemicals Corporation, NCO% = 23.5) and 10 g of methylisobutyl ketone (MIBK) were added and stirred. To this, 8.6 g (0.09 mol) of 3,5-dimethylpyrazole was added and heated at 50°C, and caused to react until the isocyanate content became 0%, and thus a blocked isocyanate compound was obtained.

Then, 35 g (OH group 0.04 mol) of EMASOL S-30V (sorbitan tristearate, available from Kao Corporation, hydroxyl value 68.6 mg KOH/g) and 51 g of MIBK were added and dissolved at 60°C. In 145 g of ion exchange water, 1.9 g of stearyl amine 30EO adduct, and 0.60 g of acetic acid (90% aqueous solution) were dissolved at 60°C and the resultant solution was dropped. The solution was then emulsified by a high-pressure homogenizer (400 bar) while the temperature was kept. Then, MIBK was distilled off under reduced pressure, and ion exchange water was added to obtain an emulsion having a solids concentration of 30%. The emulsion had a mean particle diameter of 0.16 µm.

The emulsion of Production Example 10 contains sorbitan tristearate which is a water repellent component and blocked isocyanate which is a crosslinking component in a ratio of 59 : 41 (parts by mass). Production Example 10 is a hybrid emulsion in which the water repellent component and the crosslinking component are emulsified by acetate of stearyl amine 30EO adduct having the natures of a nonionic surfactant and a cationic surfactant.

### [Production Example 11]

In an autoclave, 47.5 g of stearyl acrylate, 2.5 g of glycidyl methacrylate, 145 g of pure water, 15 g of tripropylene glycol, 1.5 g of sorbitan monooleate, 2 g of polyoxyethylene (EO: 18) secondary alkyl (C12-14) ether, and 1.5 g of dioctadecyldimethyl ammonium chloride were loaded, and emulsified and dispersed by ultrasonication at 60°C for 15 minutes under stirring. After replacing the interior of the autoclave with nitrogen, 0.5 g of 2,2-azobis(2-amidinopropane) dihydrochloride was added, and caused to react at 60°C for 3 hours to obtain an aqueous dispersion of polymer. Further, the solids concentration was adjusted to 30% with pure water. The emulsion had a mean particle diameter of 0.14 µm.

The aqueous dispersion of Production Example 11 contains an acrylate polymer which is a water repellent component, but does not contain a crosslinking component. Also, the emulsion is not a hybrid emulsion.

### [Production Example 12]

In an autoclave, 20 g of stearyl acrylate, 17.5 g of lauryl acrylate, 2.5 g of glycidyl methacrylate, 145 g of pure water, 15 g of tripropylene glycol, 1.5 g of sorbitan monooleate, 2 g of polyoxyethylene (EO: 18) secondary alkyl (C12-14) ether, and 1.5 g of dioctadecyldimethyl ammonium chloride were loaded, and emulsified and dispersed by ultrasonication at 60°C for 15 minutes under stirring. After replacing inside the autoclave with nitrogen, 10 g of vinyl chloride was injected, 0.5 g of 2,2-azobis(2-amidinopropane) dihydrochloride was added, and caused to react at 60°C for 3 hours to obtain an aqueous dispersion of polymer. Further, the solids concentration was adjusted to 30% with pure water. The emulsion had a mean particle diameter of 0.17 µm.

The aqueous dispersion of Production Example 12 contains an acrylate polymer which is a water repellent component, but does not contain a crosslinking component. Also, the emulsion is not a hybrid emulsion.

### [Production Example 13]

In a flask containing 30 g of stearyl acrylate, 3 g of 2-hydroxyethyl acrylate, 45 g of cyclohexane/straight-chain paraffin mixture (mixing ratio 50/50), 3 g of polyoxyethylene (EO: 10) lauryl ether, 10 g of tripropylene glycol monomethyl ether and 0.25 g of azobis bibasic acid salt, 150 g of distilled water is added under stirring to make them be emulsified and dispersed while the liquid temperature is kept at 50 to 60°C. The resultant emulsified product was allowed to react at 60°C for 6 hours under a nitrogen atmosphere, and lastly distilled water was added, and the solids concentration was adjusted to 30%. The emulsion had a mean particle diameter of 0.25 µm.

The aqueous dispersion of Production Example 13 contains paraffin wax and an acrylate polymer which are a water repellent component, but does not contain a blocked isocyanate component which is a crosslinking component. Also, the emulsion is not a hybrid emulsion.

### [Production Example 14]

A flask was charged with 94 g of stearyl acrylate, 4 g of KF-2012 (radical reactive organo polysiloxane macromonomer, available from Shin-Etsu Chemical Co., Ltd.), 2 g of 2-hydroxyethyl methacrylate, 1 g of stearyl trimethyl ammonium chloride, 6 g of polyoxyethylene (EO: 7) lauryl ether, 2 g of polyoxyethylene (EO: 21) lauryl ether, 0.1 g of dodecylmercaptan, 30 g of dipropylene glycol and 190 g of ion exchange water, and they were emulsified and dispersed at 50°C by high-speed stirring. Then a treatment with a high-pressure homogenizer (400 bar) was conducted while the temperature was kept at 40°C to obtain an emulsified product. To this emulsified product, 0.3 g of azobis(isobutylamidine) bihydrochloride was added and allowed to react for 10 hours in a nitrogen atmosphere at 60°C, and lastly distilled water was added, and the solids concentration was adjusted to 30%. The emulsion had a mean particle diameter of 0.18 µm.

The aqueous dispersion of Production Example 14 contains an acryl-silicone polymer which is a water repellent component, but does not contain a crosslinking component. Also, the emulsion is not a hybrid emulsion.

### <Examples 14 to 21 and Comparative Examples 9 to 11>

Each emulsion prepared in Production Examples 9 to 14 was formulated according to Table 4 and processed, and the initial water repellency and the laundry durability were evaluated. A cloth to be processed (test cloth) and a processing condition, an evaluation method and an evaluation criterion are as described above.

**[Table 4]**

| | | | Example 14 | Example 15 | Example 16 | Example 17 | Example 18 | Example 19 | Example 20 | Example 21 | Comparative Example 9 | Comparative Example 10 | Comparative Example 11 |
|---|---|---|---|---|---|---|---|---|---|---|---|---|---|
| Processing liquid | Production Example 5 (water repellent component 74/crosslinking component 26) | | 4% | 4% | - | - | - | - | 4% | 3% | - | - | - |
| | Production Example 9 (water repellent component 65/crosslinking component 35) | | - | - | 4% | 4% | - | - | - | - | - | - | - |
| | Production Example 10 (water repellent component 59/crosslinking component 41) | | - | - | - | - | 4% | 4% | - | - | - | - | - |
| | Production Example 11 | | 1% | 1% | 1% | 1% | 1% | 1% | - | - | 5% | - | - |
| | Production Example 12 | | - | - | - | - | - | - | - | - | - | 5% | - |
| | Production Example 13 | | - | - | - | - | - | - | - | - | - | - | 5% |
| | Production Example 14 | | - | - | - | - | - | - | 1% | 2% | - | - | - |
| | Cross-linker | | - | 1% | - | 1% | - | 1% | 1% | 1% | 1% | 1% | 1% |
| | Tap water | | 95% | 94% | 95% | 94% | 95% | 94% | 94% | 94% | 94% | 94% | 94% |
| Evaluation of water repellency | Initial | Test cloth I | 4+ | 5 | 5 | 5 | 5 | 5 | 5 | 5 | 5 | 5 | 2+ |
| | | Test cloth II | 5 | 5 | 5 | 5 | 5 | 5 | 5 | 5 | 5 | 5 | 2+ |
| | | Test cloth III | 5 | 5 | 5 | 5 | 5 | 5 | 5 | 5 | 4 | 5 | 5 |
| | | Test cloth IV | 5 | 5 | 5 | 5 | 5 | 5 | 5 | 5 | 4 | 5 | 4 |
| | After 20 times washing | Test cloth I | 3- | 3+ | 3 | 3+ | 3+ | 3 | 3+ | 3+ | 2 | 2 | 1 |
| | | Test cloth II | 3 | 3+ | 3+ | 3+ | 3+ | 3+ | 3+ | 3+ | 2 | 2+ | 2- |
| | | Test cloth III | 3 | 3+ | 3 | 3 | 3 | 3 | 3+ | 3+ | 2 | 2 | 2 |
| | | Test cloth IV | 3- | 3+ | 3+ | 4- | 3+ | 3+ | 3+ | 3+ | 1+ | 2- | 2- |

As shown in Table 4, excellent initial water repellency and laundry durability were obtained when a combination of the emulsion of Production Example 5, 9 or 10, and the emulsion of acrylate polymer of Production Example 11 or the emulsion of acryl-silicone polymer of Production Example 14 was used. In Comparative Examples 9 to 11, those showing deteriorated performance were observed depending on the kind of the cloth. In contrast, in Examples 14 to 21, excellent performance was shown in all the cloths. In Examples 20 and 21, more water drops repelled by the test cloth during the water repellency test flew outside, and the strength of repelling water was more excellent.

### INDUSTRIAL APPLICABILITY

The water repellent treatment agent of the present invention has excellent water repellency and laundry durability, and by using the present composition as a fiber treatment agent, it is possible to impart excellent water repellency and laundry durability to fibers. The water repellent treatment agent of the present invention is free of a fluorine compound, and is low in cost, and little influences on human bodies and the environment, and thus is useful as a water repellent treatment agent.

## Claims

1. A water repellent treatment agent comprising a water repellent component and a crosslinking component capable of reacting with the water repellent component, the water repellent treatment agent being an aqueous emulsion composed of a hybrid emulsion in which the water repellent component and the crosslinking component are contained in one particle, the aqueous emulsion free of a component containing fluorine,
wherein the water repellent component is a silicone component having at least one or more of an amino group, a hydroxyl group, a carboxyl group, a mercapto group, an epoxy group, and the crosslinking component is a blocked isocyanate having self-emulsifiability in which a polyoxyalkylene monoalkyl ethers is introduced into part of an isocyanate compound, or
wherein the water repellent component is a hydrocarbon compound having a long chain alkyl group and a functional group capable of reacting with the crosslinking component, and the crosslinking component is a blocked isocyanate, or
wherein the water repellent components are a silicone component having at least one or more of an amino group, a hydroxyl group, a carboxyl group, a mercapto group, an epoxy group and a hydrocarbon compound having a long chain alkyl group and a functional group capable of reacting with the crosslinking component, and the crosslinking component is a blocked isocyanate.

2. The water repellent treatment agent according to claim 1, wherein in solids of the water repellent treatment agent, the water repellent component is 20 to 90% by mass, and the crosslinking component is 10 to 80% by mass.

3. The water repellent treatment agent according to claim 1 or 2, further comprisng a surfactant.

4. The water repellent treatment agent according to any one of claims 1 to 3, further comprising an acrylate polymer or an acryl-silicone polymer.

5. A method for producing a water repellent treatment agent free of fluorine, comprising the steps of:
(I) reacting an isocyanate compound, a hydrophilic compound capable of reacting with an isocyanate group of the isocyanate compound which is a polyoxyalkylene monoalkyl ether, and a blocking agent capable of reacting with an isocyanate group of the isocyanate compound in an optional organic solvent until an NCO content becomes 0% to obtain a blocked isocyanate in which a polyoxyalkylene monoalkyl ethers is introduced into part of the isocyanate compound;
(II) adding and mixing a water repellent component free of fluorine which is a silicone component having at least one or more of an amino group, a hydroxyl group, a carboxyl group, a mercapto group, an epoxy group, and the optional organic solvent, to a liquid containing the blocked isocyanate obtained in the step (I) and then further adding water, to obtain an emulsion; and
(III) removing the optionalorganic solvent from the emulsion obtained in the step (II) to obtain an aqueous emulsion free of fluorine, containing the blocked isocyanate and the water repellent component.

6. A method for producing a water repellent treatment agent free of fluorine, comprising the steps of:
(a) reacting an isocyanate compound, and a blocking agent capable of reacting with an isocyanate group of the isocyanate compound in an optional organic solvent until an NCO content becomes 0% to obtain a blocked isocyanate;
(b) adding and mixing a water repellent component free of fluorine which is a hydrocarbon compound having a long chain alkyl group and a functional group capable of reacting with the crosslinking component, a surfactant, an optional organic solvent to a liquid containing the blocked isocyanate obtained in the step (a), and then further adding water to obtain an emulsion; and
(c) removing the optional organic solvent from the emulsion obtained in the step (b) to obtain an aqueous emulsion free of fluorine, containing the blocked isocyanate and the water repellent compnent.

7. A fiber product having water repellency imparted by the water repellent treatment agent according to any one of claims 1 to 4.

8. A method for producing a water repellent fiber product using the water repellent treatment agent according to any one of claims 1 to 4, the method comprising the step of preparing a processing liquid containing the water repellent treatment agent, and bringing a fiber product into contact with the processing liquid.

9. A method for producing a water repellent treatment agent free of fluorine, comprising the steps of:
(a) reacting an isocyanate compound, and a blocking agent capable of reacting with an isocyanate group of the isocyanate compound in an optional organic solvent until an NCO content becomes 0% to obtain a blocked isocyanate;
(b) adding and mixing a first water repellent component free of fluorine which is a silicone component having at least one or more of an amino group, a hydroxyl group, a carboxyl group, a mercapto group, an epoxy group, a second water repellent component free of fluorine which is a hydrocarbon compound having a long chain alkyl group and a functional group capable of reacting with the crosslinking component, a surfactant, and an optional organic solvent to a liquid containing the blocked isocyanate obtained in the step (a), and then further adding water to obtain an emulsion; and
(c) removing the optional organic solvent from the emulsion obtained in the step (b) to obtain an aqueous emulsion free of fluorine, containing the blocked isocyanate, the first water repellent component, and the second water repellent component.

## Patentansprüche

1. Mittel zur wasserabweisenden Behandlung, umfassend eine wasserabweisende Komponente und eine Vernetzungskomponente, die imstande ist, mit der wasserabweisenden Komponente zu reagieren, wobei das Mittel zur wasserabweisenden Behandlung eine wässrige Emulsion ist, die zusammengesetzt ist aus einer hybriden Emulsion, bei der die wasserabweisende Komponente und die Vernetzungskomponente in einem Teilchen enthalten sind, die wässrige Emulsion ohne eine fluorhaltige Komponente,
wobei die wasserabweisende Komponente eine Silikonkomponente mit mindestens einer oder mehreren von einer Aminogruppe, einer Hydroxylgruppe, einer Carboxylgruppe, einer Mercaptogruppe, einer Epoxidgruppe ist, und die Vernetzungskomponente ein blockiertes Isocyanat mit Selbstemulgierbarkeit ist, wobei ein Polyoxyalkylenmonoalkylether in einen Teil einer Isocyanatverbindung eingebracht wird, oder
wobei die wasserabweisende Komponente eine Kohlenwasserstoffverbindung mit einem langkettigen Alkylrest und einer funktionellen Gruppe, die imstande ist, mit der Vernetzungskomponente zu reagieren, ist, und die Vernetzungskomponente ein blockiertes Isocyanat ist, oder
wobei die wasserabweisenden Komponenten eine Silikonkomponente mit mindestens einer oder mehreren von einer Aminogruppe, einer Hydroxylgruppe, einer Carboxylgruppe, einer Mercaptogruppe, einer Epoxidgruppe und eine Kohlenwasserstoffverbindung mit einem langkettigen Alkylrest und einer funktionellen Gruppe, die imstande ist, mit der Vernetzungskomponente zu reagieren, sind, und die Vernetzungskomponente ein blockiertes Isocyanat ist.

2. Mittel zur wasserabweisenden Behandlung nach Anspruch 1, wobei in Feststoffen des Mittels zur wasserabweisenden Behandlung die wasserabweisende Komponente 20 bis 90 Masse-% entspricht, und die Vernetzungskomponente 10 bis 80 Masse-% entspricht.

3. Mittel zur wasserabweisenden Behandlung nach Anspruch 1 oder 2, weiterhin umfassend ein Tensid.

4. Mittel zur wasserabweisenden Behandlung nach einem der Ansprüche 1 bis 3, weiterhin umfassend ein Acrylat-Polymer oder ein Acryl-Silikon-Polymer.

5. Verfahren zur Herstellung eines fluorfreien Mittels zur wasserabweisenden Behandlung, umfassend die folgenden Schritte:
(I) Umsetzen einer Isocyanatverbindung, einer hydrophilen Verbindung, die imstande ist, mit einer Isocyanatgruppe der Isocyanatverbindung zu reagieren, die ein Polyoxyalkylenmonoalkylether ist, und eines Blockierungsmittels, das imstande ist, mit einer Isocyanatgruppe der Isocyanatverbindung zu reagieren, in einem optionalen organischen Lösungsmittel, bis ein NCO-Gehalt 0 % wird, um ein blockiertes Isocyanat, wobei ein Polyoxyalkylenmonoalkylether in einen Teil der Isocyanatverbindung eingebracht wird, zu erhalten;
(II) Hinzugeben und Zumischen einer fluorfreien wasserabweisenden Komponente, die eine Silikonkomponente mit mindestens einer oder mehreren von einer Aminogruppe, einer Hydroxylgruppe, einer Carboxylgruppe, einer Mercaptogruppe, einer Epoxidgruppe ist, und des optionalen organischen Lösungsmittels zu einer Flüssigkeit, die das in Schritt (I) erhaltene blockierte Isocyanat enthält, und danach weiterhin Hinzugeben von Wasser, um eine Emulsion zu erhalten; und
(III) Entfernen des optionalen organischen Lösungsmittels aus der in Schritt (II) erhaltenen Emulsion, um eine fluorfreie wässrige Emulsion, die das blockierte Isocyanat und die wasserabweisende Komponente enthält, zu erhalten.

6. Verfahren zur Herstellung eines fluorfreien Mittels zur wasserabweisenden Behandlung, umfassend die folgenden Schritte:
(a) Umsetzen einer Isocyanatverbindung und eines Blockierungsmittels, das imstande ist, mit einer Isocyanatgruppe der Isocyanatverbindung zu reagieren, in einem optionalen organischen Lösungsmittel, bis ein NCO-Gehalt 0 % wird, um ein blockiertes Isocyanat zu erhalten;
(b) Hinzugeben und Zumischen einer fluorfreien wasserabweisenden Komponente, die eine Kohlenwasserstoffverbindung mit einem langkettigen Alkylrest und einer funktionellen Gruppe, die imstande ist, mit der Vernetzungskomponente zu reagieren, ist, eines Tensids, eines optionalen organischen Lösungsmittels zu einer Flüssigkeit, die das in Schritt (a) erhaltene blockierte Isocyanat enthält, und danach weiterhin Hinzugeben von Wasser, um eine Emulsion zu erhalten; und
(c) Entfernen des optionalen organischen Lösungsmittels aus der in Schritt (b) erhaltenen Emulsion, um eine fluorfreie wässrige Emulsion, die das blockierte Isocyanat und die wasserabweisende Komponente enthält, zu erhalten.

7. Faserprodukt mit Wasserabweisungsvermögen, verliehen durch das Mittel zur wasserabweisenden Behandlung nach einem der Ansprüche 1 bis 4.

8. Verfahren zur Herstellung eines wasserabweisenden Faserprodukts unter Verwendung des Mittels zur wasserabweisenden Behandlung nach einem der Ansprüche 1 bis 4, wobei das Verfahren den Schritt des Bereitens einer Behandlungsflüssigkeit, die das Mittel zur wasserabweisenden Behandlung enthält, und das Inkontaktbringen eines Faserprodukts mit der Behandlungsflüssigkeit umfasst.

9. Verfahren zur Herstellung eines fluorfreien Mittels zur wasserabweisenden Behandlung, umfassend die folgenden Schritte:
(a) Umsetzen einer Isocyanatverbindung und eines Blockierungsmittels, das imstande ist, mit einer Isocyanatgruppe der Isocyanatverbindung zu reagieren, in einem optionalen organischen Lösungsmittel, bis ein NCO-Gehalt 0 % wird, um ein blockiertes Isocyanat zu erhalten;
(b) Hinzugeben und Zumischen einer ersten fluorfreien wasserabweisenden Komponente, die eine Silikonkomponente mit mindestens einer oder mehreren von einer Aminogruppe, einer Hydroxylgruppe, einer Carboxylgruppe, einer Mercaptogruppe, einer Epoxidgruppe ist, einer zweiten fluorfreien wasserabweisenden Komponente, die eine Kohlenwasserstoffverbindung mit einem langkettigen Alkylrest und einer funktionellen Gruppe, die imstande ist, mit der Vernetzungskomponente zu reagieren, ist, eines Tensids und eines optionalen organischen Lösungsmittels zu einer Flüssigkeit, die das in Schritt (a) erhaltene blockierte Isocyanat enthält, und danach weiterhin Hinzugeben von Wasser, um eine Emulsion zu erhalten; und
(c) Entfernen des optionalen organischen Lösungsmittels aus der in Schritt (b) erhaltenen Emulsion, um eine fluorfreie wässrige Emulsion, die das blockierte Isocyanat, die erste wasserabweisende Komponente und die zweite wasserabweisende Komponente enthält, zu erhalten.

## Revendications

1. Agent de traitement d'hydrofugation comprenant un composant d'hydrofugation et un composant de réticulation capable de réagir avec le composant d'hydrofugation, l'agent de traitement d'hydrofugation étant une émulsion aqueuse composée d'une émulsion hybride dans laquelle le composant d'hydrofugation et le composant de réticulation son contenus dans une particule, l'émulsion aqueuse exempte d'un composant contenant du fluor,
le composant d'hydrofugation étant un composant de silicone ayant au moins un ou plusieurs d'un groupe amino, d'un groupe hydroxyle, d'un groupe carboxyle, d'un groupe mercapto, d'u groupe époxy et le composant de réticulation étant un isocyanate bloqué ayant une auto-émulsibilité dans lequel un éther de polyoxyalkylène monoalkyle est introduit dans une partie d'un composé isocyanate ou
le composant d'hydrofugation étant un composé hydrocarbure ayant un groupe alkyle à longue chaîne et un groupe fonctionnel capable de réagir avec le composant de réticulation et le composant de réticulation étant un isocyanate bloqué ou
les composants d'hydrofugation étant un composant de silicone ayant au moins un ou plusieurs d'un groupe amino, d'un groupe hydroxyle, d'un groupe carboxyle, d'un groupe mercapto, d'u groupe époxy et un composé hydrocarbure ayant un groupe alkyle à longue chaîne et un groupe fonctionnel capable de réagir avec le composant de réticulation et le composant de réticulation étant un isocyanate bloqué.

2. Agent de traitement d'hydrofugation selon la revendication 1, dans lequel dans les solides de l'agent de traitement d'hydrofugation, le composant d'hydrofugation est de 20 à 90 % en masse et le composant de réticulation est de 10 à 80 % en masse.

3. Agent de traitement d'hydrofugation selon la revendication 1 ou 2, comprenant en outre un tensioactif.

4. Agent de traitement d'hydrofugation selon l'une quelconque des revendications 1 à 3, comprenant en outre un polymère acrylate ou un polymère acryl-silicone.

5. Procédé de production d'un agent de traitement d'hydrofugation exempt de fluor, comprenant les étapes consistant à :
(I) faire réagir un composé isocyanate, un composé hydrophile capable de réagir avec un groupe isocyanate du composé isocyanate qui est un éther de polyoxyalkylène monoalkyle et un agent de blocage capable de réagir avec un groupe isocyanate du composé isocyanate dans un solvant organique optionnel jusqu'à ce qu'une teneur en NCO devienne 0 % pour obtenir un isocyanate bloqué dans lequel un éther de polyoxyalkylène monoalkyle est introduit dans une partie du composé isocyanate ;
(II) ajouter et mélanger un composant d'hydrofugation exempt de fluor qui est un composant de silicone ayant au moins un ou plusieurs d'un groupe amino, d'un groupe hydroxyle, d'un groupe carboxyle, d'un groupe mercapto, d'un groupe époxy et le solvant organique optionnel, à un liquide contenant l'isocyanate bloqué obtenu dans l'étape (I) puis en outre en ajoutant de l'eau, pour obtenir une émulsion ;
et
(III) enlever le solvant organique optionnel de l'émulsion obtenue dans l'étape (II) pour obtenir une émulsion aqueuse exempte de fluor, contenant l'isocyanate bloqué et le composant d'hydrofugation.

6. Procédé de production d'un agent de traitement d'hydrofugation exempt de fluor, comprenant les étapes consistant à :
(a) faire réagir un composé isocyanate et un agent de blocage capable de réagir avec un groupe isocyanate du composé isocyanate dans un solvant organique optionnel jusqu'à ce qu'une teneur en NCO devienne 0 % pour obtenir un isocyanate bloqué ;
(b) ajouter et mélanger un composant d'hydrofugation exempt de fluor qui est un composé hydrocarbure ayant un groupe alkyle à longue chaîne et un groupe fonctionnel capable de réagir avec le composant de réticulation, un tensioactif, un solvant organique optionnel à un liquide contenant l'isocyanate bloqué obtenu dans l'étape (a), puis en outre en ajoutant de l'eau pour obtenir une émulsion ; et
(c) enlever le solvant organique optionnel de l'émulsion obtenue dans l'étape (b) pour obtenir une émulsion aqueuse exempte de fluor, contenant l'isocyanate bloqué et le composant d'hydrofugation.

7. Produit de fibre ayant une hydrofugation impartie par l'agent de traitement d'hydrofugation selon l'une quelconque des revendications 1 à 4.

8. Procédé de production d'un produit de fibre d'hydrofugation utilisant l'agent de traitement d'hydrofugation selon l'une quelconque des revendications 1 à 4, le procédé comprenant l'étape de préparation d'un liquide de traitement contenant l'agent de traitement d'hydrofugation et mettant en contact un produit de fibre avec le liquide de traitement.

9. Procédé de production d'un agent de traitement d'hydrofugation exempt de fluor, comprenant les étapes consistant à :
(a) faire réagir un composé isocyanate et un agent de blocage capable de réagir avec un groupe isocyanate du composé isocyanate dans un solvant organique optionnel jusqu'à ce qu'une teneur en NCO devienne 0 % pour obtenir un isocyanate bloqué ;
(b) ajouter et mélanger un premier composant d'hydrofugation exempt de fluor qui est un composant de silicone ayant au moins un ou plusieurs d'un groupe amino, d'un groupe hydroxyle, d'un groupe carboxyle, d'u groupe mercapto, d'un groupe époxy, un second composant d'hydrofugation exempt de fluor qui est un composé hydrocarbure ayant un groupe alkyle à longue chaîne et un groupe fonctionnel capable de réagir avec le composant de réticulation, un tensioactif et un solvant organique optionnel à un liquide contenant l'isocyanate bloqué obtenu dans l'étape (a) puis en outre en ajoutant de l'eau pour obtenir une émulsion ; et
(c) enlever le solvant organique optionnel de l'émulsion obtenue dans l'étape (b) pour obtenir une émulsion aqueuse exempte de fluor, contenant l'isocyanate bloqué, le premier composant d'hydrofugation et le second composant d'hydrofugation.
